# EUROPÄISCHE PATENTANMELDUNG

(11) **EP 2 369 324 A1**
(43) Veröffentlichungstag der Anmeldung: **28.09.2011**
(21) Anmeldenummer: 10003048.5
(22) Anmeldetag: 23.03.2010
(51) Int. Cl.: G01N 21/64

(54) **Verfahren zur Herstellen eines analytischen Testelementes, analytisches Testelement, Verwendung eines analytischen Testelementes sowie analytisches Testsystem**

(71) Anmelder: F. Hoffmann-La Roche AG, 4070 Basel (CH); Roche Diagnostics GmbH, 68305 Mannheim (DE)
(72) Erfinder: Brueckner, Thorsten, 69198 Schriesheim (DE); Schierenbeck, Sigrun, 68167 Mannheim (DE)
(74) Vertreter: Bittner, Thomas L.

(57) **Zusammenfassung**

Die Erfindung betrifft ein Verfahren zum Herstellen eines analytischen Testelementes (2), insbesondere eines Testelementes für die in-vitro-Diagnostik, wobei das Verfahren die folgenden Schritte umfasst: Herstellen eines Testträgers (3), Herstellen eines analytischen Testfeldes (4) an dem Testträger (3) und Anordnen eines Fluoreszenzeichelementes (1) an dem Testträger. Hierbei wird das Fluoreszenzeichelement (1) als Spritzgussteil mit einer Matrix aus einem Kunststoffmaterial und hierin eingelagerten Fluoreszenzpartikeln gebildet, indem ein Spritzgussmaterial aus plastifiziertem Kunststoff mit hierin eingelagerten Fluoreszenzpartikeln in eine für das Fluoreszenzeichelement formgebende Spritzgussform eingespritzt wird und dort abgekühlt. Weiterhin bezieht sich die Erfindung auf ein analytisches Testelement (2) sowie ein analytisches Testsystem und die Verwendung des analytischen Testelementes (2).

## Beschreibung

Die Erfindung bezieht sich auf Technologien in Verbindung mit einem analytischen Testelement, insbesondere einem Testelement für die in-vitrro-Diagnostik.

### Hintergrund der Erfindung

Analytische Testelemente nehmen heute einen wichtigen Platz im Bereich der in-vitro-Diagnostik ein, da sie eine schnelle und zuverlässige Bestimmung von aus dem menschlichen oder tierischen Körper stammenden Proben ermöglichen, einschließlich Blut-, Urin- oder Gewebeproben. Derartige analytische Testelemente sind in verschiedenen Ausführungsformen als solche bekannt. Zum Beispiel ist in dem Dokument US 2009/0191643 A1 ein analytisches Testelement mit einer scheibenähnlichen Form beschrieben.

Zur Auswertung solcher analytischen Testelemente werden unter Anderem optische Methoden genutzt, insbesondere fluoreszenzoptische oder fluoreszensspektroskopische Methoden. Zur Bestimmung eines oder mehrerer Parameter für die zu untersuchende Probe werden hierbei Fluoreszenzmesssignale ausgewertet. Für die Genauigkeit der Bestimmung der Parameter sowie die Vergleichbarkeit von Messergebnissen für unterschiedliche Proben ist es von besonderer Bedeutung, dass die genutzte Fluoreszenzmesseinrichtung in geeigneter Weise geeicht oder kalibriert ist. Für den Eichvorgang werden verbreitet sogenannte Fluoreszenzeichstandards oder -elemente genutzt. Hierbei handelt es sich üblicherweise um ein Element, welches bei definierter Anregung der Fluoreszenz ein reproduzierbares Fluoreszenzverhalten zeigt und somit als Eich- oder Kalibrierungsstandard für die Fluoreszenzmesseinrichtungen genutzt werden kann. Mittels Einsatz derartiger Standards kann beispielsweise eine Dejustage des optischen Systems von Fluoreszenzmesseinrichtungen oder eine Alterung der Lichtquelle solcher Fluoreszenzmesseinrichtungen ermittelt werden.

In dem Dokument US 6,635,487 B1 wird ein Testelement zur Nutzung als Fluoreszenzstandard in einem mikrofluidischen Detektionssystem vorgeschlagen. Hierbei wird ein fluoreszierendes Material an dem Testelement auf einer Seite gegenüber einer Beleuchtungsquelle angeordnet.

Im Dokument US 7,072,036 B2 ist eine Fluoreszenz-Referenzplatte beschrieben, bei der Abschnitte mit einem fluoreszierenden Material versehen sind, welches zum Beispiel mittels Tintenstrahldruck aufgebracht wird.

Das Dokument EP 1 373 870 B1 beschreibt einen Fluoreszenzeichstandard, bei dem auf einen nichtfluoreszierenden Träger in definierten Bereichen mindestens eine Polymerschicht so aufgebracht ist, dass diese Bereiche nach entsprechender Bestrahlung fluoreszieren, wobei mindestens zwei der fluoreszierenden Polymerschichten sich hinsichtlich Ihrer Dicke und/oder Zusammensetzung unterscheiden. Der Fluoreszenzeichstandard kann direkt auf einen Träger aufgebracht sein, auf dem sogenannte Substanzbibliotheken in Form eines Sonden-Arrays abgelegt sind oder werden. Das Aufbringen der mehreren Polymerschichten kann mit Hilfe unterschiedlicher Verfahren erfolgen, wozu Sputtern, Trockenätzen, Ionenimplantation, photolitografische Verfahren, drucktechnische Verfahren Spritzgießen, Walzen oder Oberflächenprägen gehören. Auch ein Aufkleben des Fluoreszenzeichstandards auf einen Objektträger kann vorgesehen sein.

Im Dokument DE 102 44 706 A1 ist ein Formkörper aus einer Kunststoff-Matrix aus einem transparenten Kunststoff offenbart, welcher einen löslichen Fluoreszenzfarbstoff und ein Streumittel enthält. Derartige Formkörper können zum Beispiel für Fahrzeugkarosserien, Designermöbel, Hinweisschilder oder die Beleuchtungstechnik eingesetzt werden.

Schließlich ist aus dem Dokument US 7,497,972 B2 ein spritzgegossenes Teil bekannt, bei dem in einen transparenten Kunststoff ein löslicher Fluoreszenzfarbstoff und Streuteilchen eingelagert sind. Auch für diese Bauteile wird eine Verwendung in Verbindung mit Fahrzeugteilen, möbeln oder Beleuchtungseinrichtung vorgesehen.

### Zusammenfassung der Erfindung

Aufgabe der Erfindung ist es, neue Technologien in Verbindung mit analytischen Testelementen anzugeben, mit denen die fluoreszenzoptische Auswertung des Testelementes erleichtert ist. Hierbei sollen bevorzugt die Genauigkeit und die Vergleichbarkeit der Auswertung mittels einer fluoreszenzoptischen Methode optimiert werden, insbesondere in Verbindung mit einem Einsatz in der in-vitro-Diagnostik.

Diese Aufgabe wird gelöst durch ein Verfahren zum Herstellen eines analytischen Testelementes nach dem unabhängigen Anspruch 1, ein analytisches Testelement nach dem unabhängigen Anspruch 8 sowie ein analytisches Testsystem nach dem unabhängigen Anspruch 14. Weiterhin ist die Verwendung eines analytischen Testsystems zum Kalibrieren einer Fluoreszenzmesseinrichtung nach dem unabhängigen Anspruch 15 vorgesehen. Vorteilhafte Ausgestaltungen der Erfindung sind Gegenstand von abhängigen Unteransprüchen.

Nach einem Aspekt der Erfindung ist ein Verfahren zum Herstellen eines analytischen Testelementes geschaffen, wobei das Verfahren die folgenden Schritte umfasst: Herstellen eines Testträgers, Herstellen eines analytischen Testfeldes an dem Testträger und Herstellen eines Fluoreszenzeichelement an dem Testträger, wobei das Fluoreszenzeichelement als Spritzgussteil mit einer Matrix aus einem Kunststoffmaterial und hierin eingelagerten Fluoreszenzpartikeln gebildet wird, indem ein Spritzgussmaterial aus plastifiziertem Kunststoff mit hierin eingelagerten Fluoreszenzpartikeln in eine für das Fluoreszenzeichelement formgebende Spritzgussform eingespritzt wird und dort abgekühlt.

Nach einem anderen Aspekt der Erfindung ist ein analytisches Testelement geschaffen, insbesondere ein Testelement für die in-vitro-Diagnostik, mit einem Testträger, einem an dem Testträger gebildeten analytischen Testfeld und einem an dem Testträger gebildeten Fluoreszenzeichelement, wobei das Fluoreszenzeichelement als Spritzgussteil mit einer Matrix aus einem Kunststoffmaterial und hierin eingelagerten Fluoreszenzpartikeln ausgeführt ist.

Ein anderer Aspekt der Erfindung betrifft ein analytisches Testsystem, insbesondere ein Analysesystem für die in-vitro-Diagnostik, mit einem analytischen Testelement der vorgenannten Art und einem Analysator, der konfiguriert ist, eine auf das analytische Testelement gegebenen Testsubstanz mittels einer oder mehrerer fluoreszenzoptischer Methoden zu bestimmen, wobei der Analysator weiterhin konfiguriert ist, das Fluoreszenzeichelement für eine Kalibrierung einer von dem Analysator umfassten Fluoreszenzmesseinrichtung auszuwerten.

Das analytische Testelement kann verwendet werden, um eine Fluoreszenzmesseinrichtung in einem analytischen Testsystem zu kalibrieren, insbesondere ein Analysesystem für die in-vitro-Diagnostik.

Mit der Erfindung ist ein integriertes analytisches Testelement zur Verfügung gestellt, bei dessen Herstellung ein zugeordnetes Fluoreszenzeichelement an dem Testträger des Testelementes hergestellt wird, dass seinerseits in einer auch für die Massenproduktion geeigneten Art und Weise und mit zuverlässig reproduzierbarer Fluoreszenzpartikelverteilung als Spritzgussteil hergestellt wird. Die Ausbildung des Fluoreszenzeichelementes als Spritzgussteil und dessen Integration in den Testträger des analytischen Testelementes ermöglicht die Bereitstellung sowohl der Analysefunktion, nämlich mittels des analytischen Testfeldes, als auch der Fluoreszenzeichfunktion, nämlich mittels des Fluoreszenzeichelementes. Bei der Auswertung des analytischen Testelementes steht dann stets auch gleich ein Fluoreszenzeichstandard zur Verfügung, welcher die gewünschte Genauigkeit und Vergleichbarkeit der Testelementauswertung unterstützt.

Eine bevorzugte Weiterbildung der Erfindung sieht vor, dass das Spritzgussmaterial unter Verwendung von fluoreszenzfarbstoffhaltigen Kunststoff-Beads hergestellt wird. Hierbei handelt es sich bevorzugt um Kunststoff-Beads, welche einen oder mehrere Fluoreszenzfarbstoffe auf ihrer Oberfläche und/oder in ihre Matrix eingebettet enthalten. Der Fluoreszenzfarbstoff liegt bevorzugt in Form von Fluoreszenzpartikeln vor, d. h. in partikulärer Form wie zum Beispiel als Pulverpartikel. Von besonderem Vorteil ist es in diesem Zusammenhang, dass die Kunststoff-Beads ihrerseits mit einer im Wesentlichen homogenen Verteilung des Fluoreszenzfarbstoffs bereitgestellt werden können, was dann auch eine gleichmäßige oder homogene räumliche Verteilung des Fluoreszenzfarbstoffs in dem fertig gestellten Fluoreszenzeichelement fördert. Kunststoff-Beads sind Kunststoffpartikel, zum Beispiel in Form von Kunststoffschaumperlen, die zu beliebigen Formen verarbeitet werden können. Derartige Perlen / Partikel können auf verschiedene Weise erzeugt werden. Ein Weg ist die Erzeugung im Autoklaven. Hierbei wird ein Ausgangsmaterial unter Druck, Wärme und Bewegung eines Bades mit einem Treibmittel versetzt. Mittels schlagartigem Öffnen des Autoklaven gegen einen Behälter mit vergleichsweise geringem Druck werden die mit Treibmittel beladenen und warmen Kunststoffpartikel mit hoher Geschwindigkeit aus dem Autoklaven ausgetragen. Die Partikel schäumen unter dem wirksam werdenden Innendruck auf, so dass Beads entstehen. Eine weitere Möglichkeit zur Erzeugung von Kunststoffpartikeln in Form von Beads ist die Extrusion feiner Kunststoffschaumstränge mit anschließender Granulierung. Mit Hilfe der verschiedenen Verfahren können Kunststoff-Beads hergestellt werden, die mit Fluoreszenzfarbstoff versetzt sind.

Bei einer zweckmäßigen Ausgestaltung der Erfindung kann vorgesehen sein, dass die Matrix aus einem eine Fluoreszenzlichtausbreitung unterbindenden Kunststoffmaterial gebildet wird. Bei dieser Ausführungsform ist eine unerwünschte Ausbreitung des von den Fluoreszenzpartikeln abgegebenen Fluoreszenzlichtes innerhalb des Fluoreszenzeichelementes vermindert oder sogar gänzlich vermieden. Beispielsweise wird ein im Wesentlichen schwarzes Kunststoffmaterial eingesetzt, welches zum Beispiel mittels Kohlenstoffzugabe erzeugbar ist. Die ungewollte Ausbreitung des Fluoreszenzlichtes kann ansonsten zu Messwertverfälschungen führen. Kommen bei der Herstellung des Spritzgussmaterials Kunststoff-Beads zum Einsatz, so können diese beispielsweise aus einem schwarzen Kunststoffmaterial bestehen, in welches die Fluoreszenzpartikel eingelagert sind. Alternativ kann das Fluoreszenzeichelement in einem 2K-Spritzgußverfahren (2K - Zweikomponenten) hergestellt werden, indem beispielsweise ein innerer Teil, welcher den Fluoreszenzfarbstoff enthält, in den Bereichen, in welchen keine Abstrahlung von Fluoreszenzlicht erwünscht wird, mit einem äußeren Teil aus beispielsweise schwarz eingefärbtem Kunststoff umspritzt wird, wodurch die unerwünschte Ausbreitung von Fluoreszenzlicht in diese Raumrichtungen vermindert wird.

Eine vorteilhafte Ausführungsform der Erfindung sieht vor, dass in dem Fluoreszenzeichelement die Fluoreszenzpartikel in die Matrix aus dem Kunststoffmaterial einer im Wesentlichen homogenen Verteilung entsprechend eingelagert werden. Die im Wesentlichen homogene oder gleichmäßige Verteilung der Fluoreszenzpartikel in dem Kunststoffmaterial unterstützt ein optimiertes Eichen oder Kalibrieren der Fluoreszenzmesseinrichtung mit Hilfe des Fluoreszenzeichelementes. Beispielsweise ist die Eichung in diesem Fall weniger oder gar nicht davon abhängig, in welchem Bereich das Fluoreszenzeichelement zur Lichtabgabe angeregt wird. Die im Wesentlichen homogene Verteilung der Fluoreszenzpartikel unterstützt eine gleichmäßige Fluoreszenzlichtabgabe über das gesamte Fluoreszenzeichelement.

Bevorzugt sieht eine Fortbildung der Erfindung vor, dass das Spritzgussmaterial mit einer im Wesentlichen homogenen Verteilung der Fluoreszenzpartikel in dem plastifizierten Kunststoff hergestellt wird. In dem bereits das Spritzgussmaterial mit einer im Wesentlichen homogenen Verteilung der Fluoreszenzpartikel hergestellt wird, ist auch die Wahrscheinlichkeit größer, dass schließlich das Fluoreszenzeichelement mit einer homogenen Verteilung der Fluoreszenzpartikel gebildet wird. In die Spritzgussform wird daher vorzugsweise ein Material eingebracht, welches seinerseits schon über eine im Wesentlichen homogene Verteilung der Fluoreszenzpartikel verfügt.

Bei einer vorteilhaften Ausgestaltung der Erfindung kann vorgesehen sein, dass das Fluoreszenzeichelement in einer Ausnehmung des Testträgers angeordnet wird. Bei der Ausnehmung an dem Testträger kann es sich um eine Öffnung oder eine Vertiefung handeln, in welche das Fluoreszenzeichelement eingesetzt wird. Auch kann eine Anordnung des Fluoreszenzeichelementes an dem Testträger mittels des sogenannten In-Mold-Verfahrens ausgeführt werden. Hierbei wird das Fluoreszenzeichelement in das Spritzgusswerkzeug zur Herstellung des Testträgers eingelegt, um anschließend den Testträger selbst herzustellen, nämlich mittels Spritzgießen.

Eine Weiterbildung der Erfindung kann vorsehen, dass das Fluoreszenzeichelement an dem Testträger einer der folgenden Befestigungsarten entsprechend befestigt wird: Schweißen wie Ultraschallschweißen, Kleben, Klemmen, Einpressen und Solventbonding.

Eine bevorzugte Weiterbildung der Erfindung sieht vor, dass der Testträger als Spritzgussteil hergestellt wird. Neben dem oben bereits erwähnten In-Mold-Verfahren kann der Testträger in einer Ausführungsform auch unabhängig von dem Fluoreszenzeichelement mittels Spritzgießen hergestellt werden, sodass der Testträger selbst ein Spritzgussteil ist. Nicht nur beim Herstellen als Spritzgussteil ist der Testträger bevorzugt aus einem transparenten Material. Bei dieser Ausführungsform kann vorgesehen sein, dass das Fluoreszenzeichelement und der Testträger beide in ein und derselben Spritzgussform hergestellt werden. Hierbei kann vorgesehen sein, dass zunächst das Fluoreszenzeichelement als Spritzgussteil erzeugt wird, um anschließend den Testträger ebenfalls mittels Spritzgießen herzustellen, beispielsweise nach einer teilweisen Öffnung des Spritzgusswerkzeuges, sodass ein Aufnahmeraum für das Kunststoffmaterial des Testträgers entsteht. Alternativ kann auch vorgesehen sein, dass das Fluoreszenzeichelement in einem ersten Spritzgusswerkzeug hergestellt wird, um es dann nach dem Abkühlen in ein zweites Spritzgusswerkzeug zu verbringen, wo der Testträger mittels Spritzgießen erzeugt wird.

Bei einer zweckmäßigen Ausgestaltung der Erfindung kann vorgesehen sein, dass der Testträger mit dem Fluoreszenzeichelement als 2K-Spritzgussteil hergestellt wird.

Eine vorteilhafte Ausführungsform der Erfindung sieht vor, dass das Fluoreszenzeichelement und / oder der Testträger, soweit als Spritzgussteil ausgeführt, wenigstens teilweise aus einem geschäumten Kunststoffmaterial hergestellten werden. Das wenigstens teilweise Schäumen des Kunststoffmaterials unterstützt eine Material sparende Ausbildung des Fluoreszenzeichelementes und/oder des Testträgers. Auch weisen geschäumte Strukturen im Vergleich zu nicht geschäumten Materialien ein geringeres Gewicht auf.

Für die Ausführungsformen des analytischen Testelementes gelten die in Verbindung mit den zugehörigen Ausgestaltungen des Verfahrens zum Herstellen gemachten Erläuterungen entsprechend.

### Beschreibung bevorzugter Ausführungsbeispiele der Erfindung

Die Erfindung wird im Folgenden anhand von bevorzugten Ausführungsbeispielen unter Bezugnahme auf Figuren einer Zeichnung näher erläutert. Hierbei zeigen:
- Fig. 1: eine schematische Darstellung eines scheibenförmigen Fluoreszenzeichelementes, welches als Spritzgussteil hergestellt ist,
- Fig. 2: eine schematische Darstellung eines analytischen Testelementes mit dem Fluoreszenzeichelement aus Fig. 1, und
- Fig. 3: eine schematische Darstellung eines weiteren analytischen Testelementes mit einem Fluoreszenzeichelement.

### Beispiel 1

Zum Herstellen eines analytischen Testelementes, insbesondere eines analytischen Testelementes für die in-vitro-Diagnostik, wird in einer Ausführungsform zunächst ein Fluoreszenzeichelement mittels Spritzgießen hergestellt, wobei als Kunststoff zum Beispiel die Materialien COC (Cyclo-Olefin-Copolymer) oder PS (Polystyrol) verwendet werden. Aus dem Kunststoffmaterial hergestellte Kunststoff-Beads, welche ihrerseits bereits Fluoreszenzpartikel enthalten, werden bei der Herstellung des Fluoreszenzeichelementes plastifiziert, wobei hierbei wahlweise weitere Kunststoffgranulate beigefügt werden können, die frei von den Fluoreszenzpartikeln sind. Auf diese Weise ist die Dichte der Verteilung der Fluoreszenzpartikel in dem herzustellenden Fluoreszenzeichelement einstellbar. Die homogene Kunststoffmasse wird dann spritzgegossen, indem das pastifizierte Kunststoffmaterial in eine formgebende Spritzgussform eingespritzt wird. Die so hergestellten Fluoreszenzeichelemente verfügen über eine homogene Verteilung der Fluoreszenzpartikel.

### Beispiel 2

In einer anderen Ausführungsform wurden zunächst Latexkugeln hergestellt, die mit Partikeln des Fluoreszenzfarbstoffes versetzt sind. Anschließend wurden diese Latexkugeln dem Kunststoffgrundmaterial, nämlich zum Beispiel COC oder PS, bei der Plastifizierung zugesetzt, um hieraus dann mittels Spritzgießen die Fluoreszenzeichelemente herzustellen. Hierbei wurde festgestellt, dass die Homogenität der hergestellten Fluoreszenzeichelemente hinsichtlich der Verteilung der Fluoreszenzpartikel bei Verwendung von PS mit den zugesetzten Latexkugeln besser ist als bei COC. Beim Vermessen des Fluoreszenzverhaltens für 50 Proben ergab sich bei PS ein Variabilitätskoeffizient von 4 %, wohingegen dieser für zwei jeweils ebenfalls 50 Fluoreszenzeichelemente umfassende Messungen für COC 12 % beziehungsweise 14 % betrug. Die Fluoreszenzfarbstoffverteilung in PS schwankt also weniger. Die Homogenität der Verteilung der Fluoreszenzpartikel innerhalb der hergestellten Fluoreszenzeichelemente wurde experimentell untersucht, indem für ausgewählte Fluoreszenzeichelemente die Fluoreszenzwerte in drei Bereichen des jeweiligen Elementes gemessen wurden.

### Beispiel 3

Weiterhin wurde für die vorgenannten Fluoreszenzeichelemente die Langzeitstabilität des Fluoreszenzverhaltens experimentell untersucht. Über einen Zeitraum von insgesamt sechs Monaten ergaben sich für die Elemente aus PS und COC jeweils relative Fluoreszenzsignalabnahmen von durchschnittlich etwa 2 % für den Gesamtzeitraum.

### Beispiel 4

In einer weiteren Ausführungsform wurden Fluoreszenzeichelemente hergestellt und verglichen, die optisch transparent und nicht transparent sind. Die nicht transparenten Fluoreszenzeichelemente enthielten zusätzlich Kohlenstoff in der Kunststoffmatrix, welcher eine Lichtausbreitung des Fluoreszenzlichtes in den Fluoreszenzeichelementen hemmt oder sogar ganz unterbindet. Sowohl die transparenten als auch die nicht transparenten Fluoreszenzeichelemente wurden aus PS hergestellt, indem zunächst ein Kunststoffgranulat erzeugt wurde, bei dem PS mit dem Fluoreszenzfarbstoff versetzt war. Anschließend wurde dieses Ausgangsgranulat mit farbstofffreiem PS-Granulat vermischt und plastifiziert. Auf diese Weise wurden die Farbstoffpartikel homogen in dem Kunststoffmaterial verteilt, um anschließend die Fluoreszenzeichelemente mittels Spritzgießen herzustellen. Das Herstellen eines Ausgangsgranulats mit Farbstoff erleichtert das Erzeugen einer homogenen Verteilung der Farbstoffpartikel in den Fluoreszenzeichelementen. Einem Kilogramm des Kunststoffmaterials wurden in verschiedenen Versuchsreihen zwischen etwa 0,1 mg und etwa 1 mg des Fluoreszenzfarbstoffes zugemischt. Im Fall der kohlenstoffhaltigen, optisch nicht transparenten Fluoreszenzeichelemente war Kohlenstoff sowohl im fluoreszenzfarbstoffhaltigen als auch im farbstofffreien PS-Granulat beigemischt. Die Kohlenstoffkonzentration betrug in den gewählten Ausführungsbeispielen etwa 0,1 bis etwa 0,5 mg pro Kilogramm des Kunststoffgranulats.

### Beispiel 5

Das Vermessen des Fluoreszenzverhaltens von 100 transparenten Fluoreszenzeichelementen ergab einen Variabilitätskoeffizienten von etwa 1,7 %, was eine außergewöhnlich hohe Homogenität der Proben anzeigt. Im Fall der nichttransparenten Fluoreszenzeichelemente, die zusätzlich Kohlenstoff enthielten, betrug der Variabilitätskoeffizient etwa 14 %.

### Beispiel 6

Die Homogenität der Verteilung der Fluoreszenzpartikel innerhalb der hergestellten Fluoreszenzeichelemente wurde weiterhin dadurch experimentell untersucht, dass für 25 ausgewählte Elemente der 100 transparenten Fluoreszenzeichelemente die Fluoreszenzwerte in drei Bereichen des jeweiligen Elementes gemessen wurden. Der Variabilitätskoeffizient für die Schwankungen zwischen den Bereichen innerhalb jedes Fluoreszenzeichelementes ergab sich zu weniger als 2 %. Für alle Messungen an den 25 ausgewählten Fluoreszenzeichelementen (75 Messungen) ergab sich ein sehr guter Wert von etwa 2,3 %.

Als exemplarischer Fluoreszenzfarbstoff wurde in den Beispielen der Squarylium-Farbstoff S 2097 (FEW Chemicals GmbH, Bitterfeld-Wolfen, Deutschland verwendet.

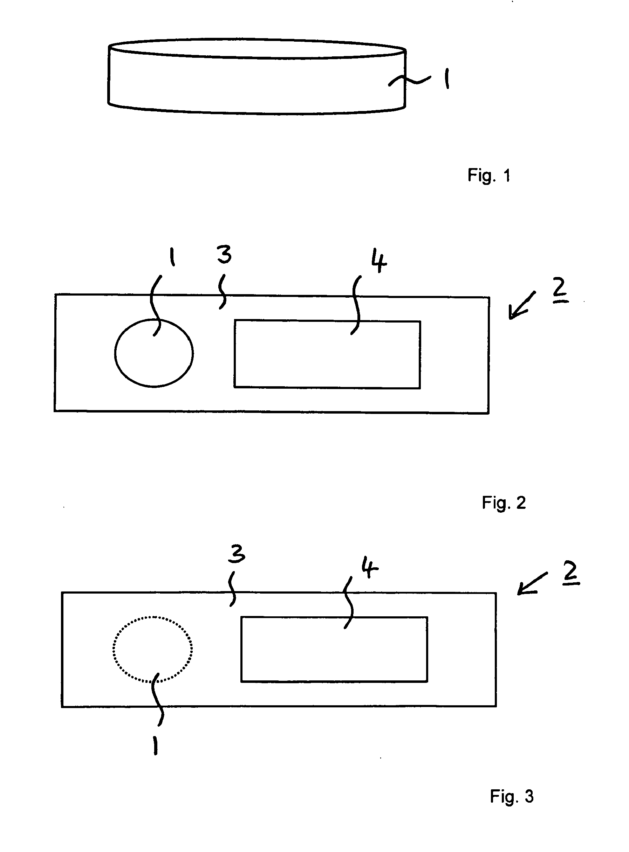

Fig. 1 zeigt schematisch ein Fluoreszenzeichelement 1, welches mittels Spritzgießen hergestellt ist.

Fig. 2 zeigt eine schematische Darstellung eines analytischen Testelementes 2 für die in-vitro-Diagnostik, bei dem in den Testträger 3 das Fluoreszenzeichelement 1 aus Fig. 1 nachträglich benachbart zum eigentlichen Testbereich 4 eingebracht wurde, was in dem dargestellten Ausführungsbeispiel mittels Kleben durchgeführt wurde.

Fig. 3 zeigt eine weitere Ausführungsform eines analytischen Testelementes 2, bei dessen Herstellung das Fluoreszenzeichelement 1 im 2K-Spritzverfahren mit hergestellt wurde. Die Herstellung erfolgt also in einem einheitlichen Prozess, bei dem bevorzugt im ersten Schritt das Fluoreszenzeichelement 1 in der Spritzgussform hergestellt wird, um diese anschließend zu erweitern, so dass in der gleichen Spritzform im zweiten Schritt den Testträger 3 des analytischen Testelementes 4 mittels Spritzgießen hergestellt werden kann.

## Patentansprüche

1. Verfahren zum Herstellen eines analytischen Testelementes (2), insbesondere eines Testelementes für die in-vitro-Diagnostik, wobei das Verfahren die folgenden Schritte umfasst:
- Herstellen eines Testträgers (3),
- Herstellen eines analytischen Testfeldes (4) an dem Testträger (3) und
- Anordnen eines Fluoreszenzeichelementes (1) an dem Testträger,
wobei das Fluoreszenzeichelement (1) als Spritzgussteil mit einer Matrix aus einem Kunststoffmaterial und hierin eingelagerten Fluoreszenzpartikeln gebildet wird, indem ein Spritzgussmaterial aus plastifiziertem Kunststoff mit hierin eingelagerten Fluoreszenzpartikeln in eine für das Fluoreszenzeichelement formgebende Spritzgussform eingespritzt wird und dort abgekühlt.

2. Verfahren nach Anspruch 1, **dadurch gekennzeichnet, dass** das Spritzgussmaterial unter Verwendung von fluoreszenzfarbstofarhaltigen Kunststoff-Beads hergestellt wird.

3. Verfahren nach mindestens einem der vorangehenden Ansprüche, **dadurch gekennzeichnet, dass** in dem Fluoreszenzeichelement (1) die Fluoreszenzpartikel in die Matrix aus dem Kunststoffmaterial einer im Wesentlichen homogenen Verteilung entsprechend eingelagert werden.

4. Verfahren nach mindestens einem der vorangehenden Ansprüche, **dadurch gekennzeichnet, dass** das Spritzgussmaterial mit einer im Wesentlichen homogenen Verteilung der Fluoreszenzpartikel in dem plastifizierten Kunststoff hergestellt wird.

5. Verfahren nach mindestens einem der vorangehenden Ansprüche, **dadurch gekennzeichnet, dass** das Fluoreszenzeichelement (1) an dem Testträgers (3) einer der folgenden Befestigungsarten entsprechend befestigt wird: Schweißen wie Ultraschallschweißen, Kleben, Klemmen, Einpressen und Solventbonding, wobei das Fluoreszenzeichelement (1) wahlweise in einer Ausnehmung des Testträgers (3) angeordnet wird.

6. Verfahren nach mindestens einem der vorangehenden Ansprüche, **dadurch gekennzeichnet, dass** der Testträger (3) als Spritzgussteil hergestellt wird, wahlweise .mit dem Fluoreszenzeichelement als 2K-Spritzgussteil.

7. Verfahren nach mindestens einem der vorangehenden Ansprüche, **dadurch gekennzeichnet, dass** das Fluoreszenzeichelement (1) und / oder der Testträger (3), soweit als Spritzgussteil ausgeführt, wenigstens teilweise aus einem geschäumten Kunststoffmaterial hergestellten werden.

8. Analytisches Testelement (2), insbesondere Testelement für die in-vitro-Diagnostik, mit:
- einem Testträger (3),
- einem an dem Testträger (3) gebildeten analytischen Testfeld (4) und
- einem an dem Testträger (3) gebildeten Fluoreszenzeichelement (1), wobei das Fluoreszenzeichelement (1) als Spritzgussteil mit einer Matrix aus einem Kunststoffmaterial und hierin eingelagerten Fluoreszenzpartikeln ausgeführt ist.

9. Testelement (2) nach Anspruch 8, **dadurch gekennzeichnet, dass** die Matrix aus einem eine Fluoreszenzlichtausbreitung unterbindenden Kunststoffmaterial ist.

10. Testelement (2) nach Anspruch 8 oder 9, **dadurch gekennzeichnet, dass** die Fluoreszenzpartikel in die Matrix aus dem Kunststoffmaterial einer im Wesentlichen homogenen Verteilung entsprechend eingelagert sind.

11. Testelement nach mindestens einem der Ansprüche 8 bis 10, **dadurch gekennzeichnet, dass** das Fluoreszenzeichelement an dem Testträger (3) einer der folgenden Befestigungsarten entsprechend befestigt ist: Schweißen wie Ultraschallschweißen, Kleben, Klemmen, Einpressen und Solventbonding, wobei das Fluoreszenzeichelement (1) wahlweise in einer Ausnehmung des Testträgers (3) angeordnet ist.

12. Testelement nach mindestens einem der Ansprüche 8 bis 11, **dadurch gekennzeichnet, dass** der Testträger (3) als Spritzgussteil ausgeführt ist, wahlweise mit dem Fluoreszenzeichelement (1) als 2K-Spritzgussteil.

13. Testelement nach mindestens einem der Ansprüche 8 bis 12, **dadurch gekennzeichnet, dass** das Fluoreszenzeichelement (1) und / oder der Testträger (3), soweit als Spritzgussteil ausgeführt, wenigstens teilweise aus einem geschäumten Kunststoffmaterial bestehen.

14. Analytisches Testsystem, insbesondere Analysesystem für die in-vitro-Diagnostik, mit:
- einem analytischen Testelement (2) nach mindestens einem der Ansprüche 8 bis 13 und
- einem Analysator, der konfiguriert ist, eine auf das analytische Testelement gegebene Testsubstanz mittels einer fluoreszenzoptischen Methode zu bestimmen,
wobei der Analysator weiterhin konfiguriert ist, das Fluoreszenzeichelement (1) für eine Kalibrierung einer von dem Analysator umfassten Fluoreszenzmesseinrichtung auszuwerten.

15. Verwendung eines analytischen Testelementes (2) nach mindestens einem der Ansprüche 8 bis 13 zum Kalibrieren einer Fluoreszenzmesseinrichtung in einem analytischen Testsystem, insbesondere einem Analysesystem für die in vitro Diagnostik.

## Geänderte Patentansprüche

### Geänderte Patentansprüche gemäss Regel 137(2) EPÜ.

**1.** Verfahren zum Herstellen eines analytischen Testelementes (2), insbesondere eines Testelementes für die in-vitro Diagnostik, wobei das Verfahren die folgenden Schritte umfasst:
- Herstellen eines Testträgers (3),
- Herstellen eines analytischen Testfeldes (4) an dem Testträger (3) und
- Anordnen eines Fluoreszenzeichelementes (1) an dem Testträger,
wobei das Fluoreszenzeichelement (1) als Spritzgussteil mit einer Matrix aus einem Kunststoffmaterial und hierin eingelagerten Fluoreszenzpartikeln gebildet wird, **dadurch gekennzeichnet, dass** das Spritzgussmaterial aus plastifiziertem Kunststoff mit hierin eingelagerten Fluoreszenzpartikeln in eine für das Fluoreszenzeichelement formgebende Spritzgussform eingespritzt wird und dort abgekühlt.

**2.** Verfahren nach Anspruch 1, **dadurch gekennzeichnet, dass** das Spritzgussmaterial unter Verwendung von fluoreszenzfarbstoffhaltigen Kunststoff-Beads hergestellt wird.

**3.** Verfahren nach mindestens einem der vorangehenden Ansprüche, **dadurch gekennzeichnet, dass** in dem Fluoreszenzeichelement (1) die Fluoreszenzpartikel in die Matrix aus dem Kunststoffmaterial einer im Wesentlichen homogenen Verteilung entsprechend eingelagert werden.

**4.** Verfahren nach mindestens einem der vorangehenden Ansprüche, **dadurch gekennzeichnet, dass** das Spritzgussmaterial mit einer im Wesentlichen homogenen Verteilung der Fluoreszenzpartikel in dem plastifizierten Kunststoff hergestellt wird.

**5.** Verfahren nach mindestens einem der vorangehenden Ansprüche, **dadurch gekennzeichnet, dass** das Fluoreszenzeichelement (1) an dem Testträgers (3) einer der folgenden Befestigungsarten entsprechend befestigt wird: Schweißen wie Ultraschallschweißen, Kleben, Klemmen, Einpressen und Solventbonding, wobei das Fluoreszenzeichelement (1) wahlweise in einer Ausnehmung des Testträgers (3) angeordnet wird.

**6.** Verfahren nach mindestens einem der vorangehenden Ansprüche, **dadurch gekennzeichnet, dass** der Testträger (3) als Spritzgussteil hergestellt wird, wahlweise mit dem Fluoreszenzeichelement als 2K-Spritzgussteil.

**7.** Verfahren nach mindestens einem der vorangehenden Ansprüche, **dadurch gekennzeichnet, dass** das Fluoreszenzeichelement (1) und / oder der Testträger (3), soweit als Spritzgussteil ausgeführt, wenigstens teilweise aus einem geschäumten Kunststoffmaterial hergestellten werden.

**8.** Analytisches Testelement (2), insbesondere Testelement für die in-vitro-Diagnostik, mit:
- einem Testträger (3),
- einem an dem Testträger (3) gebildeten analytischen Testfeld (4) und
- einem an dem Testträger (3) gebildeten Fluoreszenzeichelement (1), wobei das Fluoreszenzeichelement (1) als Spritzgussteil mit einer Matrix aus einem Kunststoffmaterial und hierin eingelagerten Fluoreszenzpartikeln ausgeführt ist, **dadurch gekennzeichnet, dass** das Spritzgussmaterial in eine für das Fluoreszenzeichelement formgebende Spritzgussform eingespritzt wird und dort abgekühlt.

**9.** Testelement (2) nach Anspruch 8, **dadurch gekennzeichnet, dass** die Matrix aus einem eine Fluoreszenzlichtausbreitung unterbindenden Kunststoffmaterial ist.

**10.** Testelement (2) nach Anspruch 8 oder 9, **dadurch gekennzeichnet, dass** die Fluoreszenzpartikel in die Matrix aus dem Kunststoffmaterial einer im Wesentlichen homogenen Verteilung entsprechend eingelagert sind.

**11.** Testelement nach mindestens einem der Ansprüche 8 bis 10, **dadurch gekennzeichnet, dass** das Fluoreszenzeichelement an dem Testträger (3) einer der folgenden Befestigungsarten entsprechend befestigt ist: Schweißen wie Ultraschallschweißen, Kleben, Klemmen, Einpressen und Solventbonding, wobei das Fluoreszenzeichelement (1) wahlweise in einer Ausnehmung des Testträgers (3) angeordnet ist.

**12.** Testelement nach mindestens einem der Ansprüche 8 bis 11, **dadurch gekennzeichnet, dass** der Testträger (3) als Spritzgussteil ausgeführt ist, wahlweise mit dem Fluoreszenzeichelement (1) als 2K-Spritzgussteil.

**13.** Testelement nach mindestens einem der Ansprüche 8 bis 12, **dadurch gekennzeichnet, dass** das Fluoreszenzeichelement (1) und / oder der Testträger (3), soweit als Spritzgussteil ausgeführt, wenigstens teilweise aus einem geschäumten Kunststoffmaterial bestehen.

**14.** Analytisches Testsystem, insbesondere Analysesystem für die in-vitro-Diagnostik, mit:
- einem analytischen Testelement (2) nach mindestens einem der Ansprüche 8 bis 13 und
- einem Analysator, der konfiguriert ist, eine auf das analytische Testelement gegebene Testsubstanz mittels einer fluoreszenzoptischen Methode zu bestimmen,
wobei der Analysator weiterhin konfiguriert ist, das Fluoreszenzeichelement (1) für eine Kalibrierung einer von dem Analysator umfassten Fluoreszenzmesseinrichtung auszuwerten.

**15.** Verwendung eines analytischen Testelementes (2) nach mindestens einem der Ansprüche 8 bis 13 zum Kalibrieren einer Fluoreszenzmesseinrichtung in einem analytischen Testsystem, insbesondere einem Analysesystem für die in vitro Diagnostik.
